# EUROPEAN PATENT APPLICATION

(11) **EP 4 826 583 A1**
(43) Date of publication of application: **21.10.2026**
(21) Application number: 24921974.2
(22) Date of filing: 25.11.2024
(51) Int. Cl.: G06F 21/57

(54) **SYSTEM, METHOD, AND PROGRAM FOR INSPECTING VULNERABILITIES IN WEB APPLICATION**

(30) Priority: 31.01.2024 JP 2024013745
(71) Applicant: AEYE SECURITY LAB INC., Tokyo 101-0054 (JP)
(72) Inventor: SUGIYAMA, Toshiharu, Tokyo 101-0054 (JP); ANZAI, Masato, Tokyo 101-0054 (JP)
(74) Representative: Viering, Jentschura & Partner mbB Patent- und Rechtsanwälte
(86) International application number: PCT/JP2024/041589
(87) International publication number: WO 2025/164055

(57) **Abstract**

A vulnerability inspection server 10 according to an embodiment of the present invention is able to inspect various applications for vulnerabilities. The server 10 provides a vulnerability inspection service in which it performs static analysis of vulnerabilities of a web application, to a user who operates a user terminal 30 communicatively connected to the server 10 through a communication network 20. The server 10 uses a large language model to acquire endpoint information including information on a process performed at each of multiple endpoints in the web application, on the basis of the source code of the web application and to acquire vulnerability information that is information on a vulnerability of each of the endpoints, on the basis of the corresponding endpoint information and specification information. This mechanism can be uniformly applied to vulnerability inspections on various applications constructed in diverse environments.

## Description

### TECHNICAL FIELD

The present invention relates to a system, method, and program for inspecting web applications for vulnerabilities.

### BACKGROUND ART

Detection of vulnerabilities of applications has been performed through static analysis of the source code of the applications (e.g., see Patent Literature 1 below). Such static analysis typically involves inspecting the data flow of the entire source code and reproducing the flow from malicious input to the manifestation of a vulnerability.

### Citation List

### Patent Literature

[Patent Literature 1] Japanese Unexamined Patent Application Publication No. 2019-003309

### SUMMARY OF THE INVENTION

### Problems to be Solved by the Invention

However, with respect to the static analysis described above, different types of static analysis have to be implemented in accordance with the environment, including the language and framework. For this reason, it is difficult to apply the same type of static analysis to vulnerability inspections on various applications constructed in diverse environments.

One object of embodiments of the present invention is to be able to inspect various applications for vulnerabilities. Other objects of the embodiments of the present invention will become apparent upon reference to the entire description.

### Means for Solving the Problems

A system according to an embodiment of the present invention is a system for inspecting a web application for vulnerabilities. The system includes one or more computer processors. The one or more computer processors perform operations including generating first instruction information for instructing output, on the basis of source code of the web application, of endpoint information that is information on each of multiple endpoints in the web application and includes process information that is information on a process performed at each of the endpoints, inputting the first instruction information into a first large language model and acquiring the endpoint information output from the first large language model, acquiring specification information including a specification, described in natural language, of each of the endpoints, generating second instruction information for instructing output, on the basis of the endpoint information and the specification information, of vulnerability information that is information on a vulnerability of each of the endpoints, and inputting the second instruction information into a second large language model and acquiring the vulnerability information output from the second large language model.

A method according to an embodiment of the present invention is a method for inspecting a web application for vulnerabilities. The method is performed by one or more computers. The method includes generating first instruction information for instructing output, on the basis of source code of the web application, of endpoint information that is information on each of multiple endpoints in the web application and includes process information that is information on a process performed at each of the endpoints, inputting the first instruction information into a first large language model and acquiring the endpoint information output from the first large language model, acquiring specification information including a specification, described in natural language, of each of the endpoints, generating second instruction information for instructing output, on the basis of the endpoint information and the specification information, of vulnerability information that is information on a vulnerability of each of the endpoints, and inputting the second instruction information into a second large language model and acquiring the vulnerability information output from the second large language model.

A program according to an embodiment of the present invention is a program for inspecting a web application for vulnerabilities. The program causes one or more computers to perform operations including generating first instruction information for instructing output, on the basis of source code of the web application, of endpoint information that is information on each of multiple endpoints in the web application and includes process information that is information on a process performed at each of the endpoints, inputting the first instruction information into a first large language model and acquiring the endpoint information output from the first large language model, acquiring specification information including a specification, described in natural language, of each of the endpoints, generating second instruction information for instructing output, on the basis of the endpoint information and the specification information, of vulnerability information that is information on a vulnerability of each of the endpoints, and inputting the second instruction information into a second large language model and acquiring the vulnerability information output from the second large language model.

### Advantageous Effects of the Invention

The various embodiments of the present invention are able to inspect various applications for vulnerabilities.

### BRIEF DESCRIPTION OF THE DRAWINGS

FIG. 1 is a schematic diagram showing the configuration of a network including a vulnerability inspection server 10 according to an embodiment of the present invention.
FIG. 2 is a diagram illustrating information managed by an inspection rule information table 152.
FIG. 3 is a diagram illustrating information managed by an inspection management table 154.
FIG. 4 is a diagram illustrating information managed by an inspection detail management table 156.
FIG. 5 is a diagram illustrating an inspection screen 50.
FIG. 6 is a diagram illustrating an inspection rule specification screen 60.
FIG. 7 is a flowchart illustrating a process performed by the server 10 when performing a vulnerability inspection.
FIG. 8 is a diagram illustrating a prompt for acquiring endpoint information.
FIG. 9 is a diagram illustrating a response from a large language model to which the prompt for acquiring endpoint information has been input.
FIG. 10 is a diagram illustrating a prompt for acquiring specification information.
FIG. 11 is a diagram illustrating a response from a large language model to which the prompt for acquiring specification information has been input.
FIG. 12 is a diagram illustrating a prompt for acquiring vulnerability information.
FIG. 13 is a diagram illustrating a response from a large language model to which the prompt for acquiring vulnerability information has been input.
FIG. 14 is a diagram illustrating a prompt for extracting specification information.
FIG. 15 is a diagram illustrating a response from a large language model to which the prompt for extracting specification information has been input.

### DESCRIPTION OF EMBODIMENTS

Embodiments of the present invention will be described below with reference to the drawings. In the drawings, the same or similar components may be given the same reference signs.

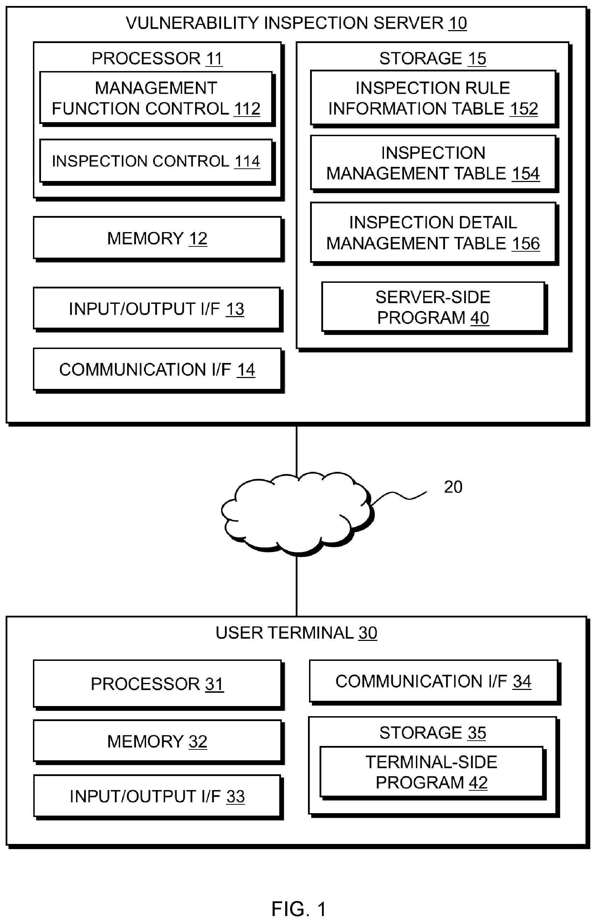

FIG. 1 is a schematic diagram illustrating the configuration of a network including a vulnerability inspection server 10 according to an embodiment of the present invention. As shown, the server 10 is communicatively connected to a user terminal 30 through a communication network 20, such as the Internet. Although only one user terminal 30 is shown in FIG. 1, the server 10 is communicatively connected to multiple user terminals 30. The vulnerability inspection server 10 provides, to a user who operates the user terminal 30, a vulnerability inspection service in which it performs static analysis of vulnerabilities of a web application. The vulnerability inspection server 10 is an example of an apparatus that implements all or part of the system of the present invention.

First, the hardware configuration of the vulnerability inspection server 10 will be described. The vulnerability inspection server 10 is configured as a general-purpose computer. As shown in FIG. 1, it includes a computer processor 11, main memory 12, an input/output I/F 13, a communication I/F 14, and storage 15. These components are electrically connected through a bus or the like (not shown).

The computer processor 11 is configured as a CPU, GPU, or the like. It loads various programs stored in the storage 15 and the like into the main memory 12 and executes various commands included in the programs. The main memory 12 is configured as, for example, DRAM or the like.

The input/output I/F 13 includes various input/output devices for exchanging information with an operator or the like. For example, the input/output I/F 13 includes an information input device such as a keyboard or a pointing device (e.g., a mouse, touchscreen, etc.), a sound input device such as a microphone, and an image input device such as a camera. The input/output I/F 13 also includes an image output device such as a display and a sound output device such as a speaker.

The communication I/F 14 is implemented as hardware such as a network adapter, any type of communication software, or a combination of these and is configured to perform wired or wireless communication through the communication network 20 or the like.

The storage 15 is configured as, for example, a magnetic disk, flash memory, or the like. The storage 15 stores various programs including an operating system, various types of data, and the like. For example, as shown in FIG. 1, the storage 15 includes an inspection rule information table 152 that manages information on inspection rules applicable to vulnerability inspections, an inspection management table 154 that manages information on specific inspections, and an inspection detail management table 156 that manages information on details of the specific inspections. These tables may be partially integrated into a single table or divided into multiple tables.

The storage 15 also stores, for example, a server-side program 40 according to an embodiment of the present invention. The program 40 is a program for causing the server 10 to function as all or part of the system for providing vulnerability inspection services. The server-side program 40 may be configured such that at least part thereof is executed on the user terminal 30 through a terminal-side program 42 (to be described later).

In the present embodiment, the vulnerability inspection server 10 may consist of multiple computers each having the above hardware configuration. For example, the server 10 may consist of multiple server devices.

The vulnerability inspection server 10 thus configured can function as a web server and application server, that is, can perform various processes in response to a request from the user terminal 30 and send screen data (e.g., HTML data), control data, and the like corresponding to the results of the processes to the user terminal 30. The user terminal 30 can output webpages or other screens on the basis of the received data.

Next, the hardware configuration of the user terminal 30 will be described. The user terminal 30 is configured as a general-purpose computer. As shown in FIG. 1, it includes a computer processor 31, main memory 32, an input/output I/F 33, a communication I/F 34, and storage 35. These components are electrically connected through a bus or the like (not shown).

The computer processor 31 is configured as a CPU, GPU, or the like. It loads various programs stored in the storage 35 and the like into the main memory 32 and executes various commands included in the programs. The main memory 32 is configured as, for example, DRAM or the like.

The input/output I/F 33 includes various input/output devices for exchanging information with an operator or the like. For example, the input/output I/F 33 includes an information input device such as a keyboard or a pointing device (e.g., a mouse, touchscreen, etc.), a sound input device such as a microphone, and an image input device such as a camera. The input/output I/F 33 also includes an image output device such as a display and a sound output device such as a speaker.

The communication I/F 34 is implemented as hardware such as a network adapter, any type of communication software, or a combination of these and is configured to perform wired or wireless communication through the communication network 20 or the like.

The storage 35 is configured as, for example, a magnetic disk, flash memory, or the like. The storage 35 stores various programs including an operating system, various types of data, and the like. The programs stored in the storage 35 can be downloaded and installed from an application market or the like. The storage 35 also stores the above-mentioned terminal-side program 42. The program 42 is configured as a web browser or any other application (e.g., a terminal-side application for vulnerability inspection services according to the present embodiment, etc.) and may be configured to execute at least a part of the server-side program 40, as described above.

In the present embodiment, the user terminal 30 may be configured as a smartphone, tablet terminal, personal computer, or the like.

The user who operates the user terminal 30 thus configured can use a vulnerability inspection service provided by the server 10 by communicating with the server 10 through the terminal-side program 42 installed in the storage 35 or the like.

Next, the functions of the vulnerability inspection server 10 configured as described above will be described. As shown in FIG. 1, the computer processor 11 of the server 10 is configured to function as a management function control unit 112 and an inspection control unit 114 by executing commands included in a program (e.g., at least a part of the server-side program 40) loaded into the main memory 12.

The management function control unit 112 is configured to perform various processes related to the control of vulnerability inspection service management functions. For example, the management function control unit 112 sends screen data, control data, and the like on various screens related to the management functions to the user terminal 30, performs various processes in response to inputs made by the user through the screens output on the user terminal 30, and sends the screen data, control data, and the like corresponding to the results of the processes to the user terminal 30. The management functions controlled by the management function control unit 112 include, for example, login processing (user authentication), billing control, user account management, and the like.

The inspection control unit 114 is configured to perform various processes related to the control of vulnerability inspections. For example, the inspection control unit 114 sends screen data, control data, and the like on various screens for controlling an inspection to the user terminal 30, performs various processes in response to inputs made by the user through the screens output on the user terminal 30, and sends the screen data, control data, and the like corresponding to the results of the processes to the user terminal 30.

In this embodiment, the inspection control unit 114 is configured to generate information for acquiring endpoint information, that is, first instruction information (a prompt) for instructing output, on the basis of the source code of the web application, of endpoint information that is information on each of multiple endpoints in the web application. In the present embodiment, the endpoint information includes process information (e.g., an HTTP method and/or code) that is information on a process performed at each endpoint.

An endpoint is sometimes called an API endpoint, serves as an entry point for a client to access specific functionality or data, and can also be referred to as a point or unit through which an external attack enters. By sending an HTTP request to an endpoint, the client can obtain a response from the endpoint. The endpoint information may include a path corresponding to the endpoint.

The inspection control unit 114 is also configured to input the generated first instruction information into a first large language model (LLM) and to acquire the endpoint information output from the first large language model. A large language model is a machine learning model that is trained using a large amount of data and used in natural language processing. For example, GPT provided by US-based OpenAI, Inc., BERT or PaLM provided by US-based Google, Inc., or the like can be used as a large language model. For example, the instruction information is input through an API corresponding to such a large language model.

The inspection control unit 114 is also configured to acquire specification information including a specification, described in natural language, of each endpoint.

The inspection control unit 114 is also configured to generate information for acquiring vulnerability information that is information on a vulnerability of each endpoint, that is, second instruction information (a prompt) for instructing output of the vulnerability information on the basis of the corresponding endpoint information and specification information, to input the generated second instruction information into a second large language model, and to acquire the vulnerability information output from the second large language model.

As seen above, the vulnerability inspection server 10 according to the present embodiment uses the large language models to acquire the endpoint information including the process information on the basis of the source code, the process information being the information on the process performed at each of the multiple endpoints in the web application and to acquire the vulnerability information of each endpoint on the basis of the corresponding endpoint information and specification information. Such a mechanism can be uniformly applied to vulnerability inspections on various applications constructed in diverse environments. In other words, the server 10 is able to inspect various applications for vulnerabilities.

The vulnerability inspection server 10 also acquires the vulnerability information on the basis of the specification information described in natural language. Thus, it is able to detect vulnerabilities based on business logic (e.g., vulnerabilities such as permission control issues).

In the present embodiment, the first large language model used to acquire the endpoint information and the second large language model used to acquire the vulnerability information may be the same or different.

In the present embodiment, the specification information may be acquired using various methods. For example, the inspection control unit 114 may acquire the specification information previously stored in the storage 15 or the like (e.g., previously provided by the administrator of the web application, or the like).

The specification information may also be acquired using a large language model. Specifically, the inspection control unit 114 may be configured to generate information for acquiring the specification information, that is, third instruction information for instructing output of the specification information on the basis of the endpoint information, to input the third instruction information into a third large language model, and to acquire the specification information output from the third large language model. The third large language model may be the same as or different from the first large language model and/or the second large language model. The inspection control unit 114 thus configured is able to acquire the specification information of each endpoint on the basis of the source code of the web application.

In the present embodiment, the second instruction information for acquiring the vulnerability information may be configured for instructing output of vulnerability information in accordance with predetermined vulnerability inspection rules. For example, the inspection control unit 114 may be configured to acquire inspection rules managed in the inspection rule information table 152 (e.g., previously registered by the vulnerability inspection service provider) and to generate second instruction information for instructing output of vulnerability information in accordance with the inspection rules. The inspection control unit 114 thus configured is able to improve the accuracy with which the large language model determines vulnerabilities, to apply inspection rules based on information that the large language model has yet to learn (e.g., new technologies, little-known vulnerabilities, etc.), and to achieve customization such as determining a vulnerability when a specific condition is met.

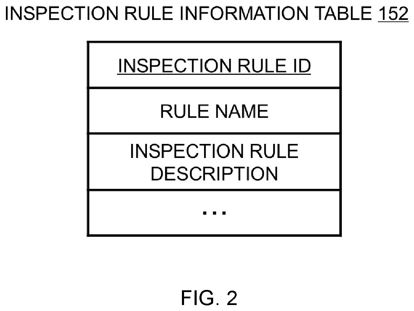

Next, a specific example as an aspect of the vulnerability inspection server 10 according to the present embodiment having these functions will be described. First, information managed by each table in this example will be described. FIG. 2 illustrates information managed by the inspection rule information table 152 in this example. In this example, the inspection rule information table 152 manages information on inspection rules applicable to vulnerability inspections. Specifically, as shown, it manages information such as a "rule name" that is the name of a specific rule and an "inspection rule description" that is the description of the inspection rule in natural language such that the information is associated with an "inspection rule ID" that identifies the specific inspection rule. In this example, such inspection rules are previously registered by the vulnerability inspection service provider. The inspection rules include, for example, the following rules.
Rule 1: If "userId" is specified as an argument for "badFunction" in the code, this is detected as "inadequate permission control."
Rule 2: If characters are output using "secureFunction" in the code, this is not detected as "Cross-Site Scripting."
Rule 3: The "escapex" function is a function to prevent "SQL Injection." Therefore, since characters are properly escaped, even if strings are concatenated, it is determined that there is no vulnerability to "SQL Injection."

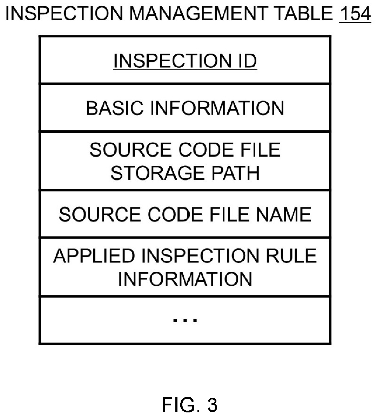

FIG. 3 illustrates information managed by the inspection management table 154 in this example. In this example, the inspection management table 154 manages information on vulnerability inspections. Specifically, as shown, it manages information such as "basic information" that includes information on a user who performs a specific inspection, the inspection date/time, and the like, a "source code file storage path" that is a path where a source code file, in which the source code of a web application to be inspected is described, is stored, a "source code file name" that is the name of the source code file, and "applied inspection rule information" that is information on inspection rules to be applied such that the information is associated with an "inspection ID" that identifies the specific inspection. The applied inspection rule information includes inspection rule IDs that identify the inspection rules to be applied.

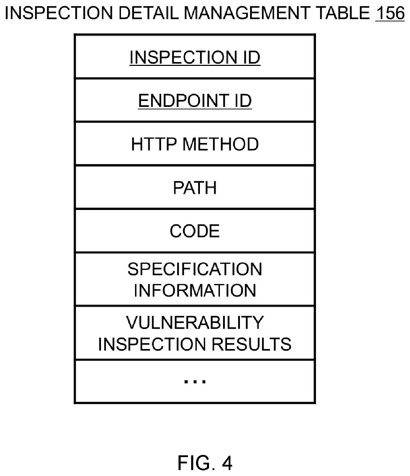

FIG. 4 illustrates information managed by the inspection detail management table 156 in this example. In this example, the inspection detail management table 156 manages information on each of the endpoints to be inspected. Specifically, as shown, it manages information such as an "HTTP method" corresponding to a process performed at a specific endpoint of a web application to undergo a specific inspection, a "path" that identifies the specific endpoint, "code" corresponding to the process performed at the endpoint, "specification information" that is information on the specification, described in natural language, of the endpoint, and "vulnerability inspection results" that are the results of the vulnerability inspection performed at the endpoint such that the information is associated with a combination of an "inspection ID" that identifies the specific inspection and an "endpoint ID" that identifies, in the specific inspection, the specific endpoint of the web application to undergo the specific inspection.

The foregoing is the description of the information managed by the tables in this example. Next, processes performed by the vulnerability inspection server 10, screens output on the user terminal 30, and the like in this example will be described.

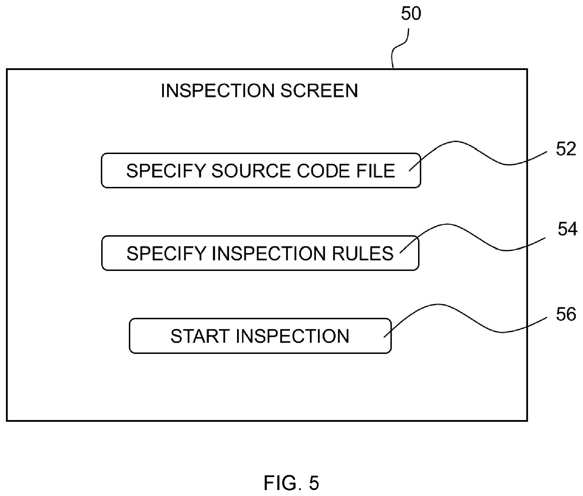

FIG. 5 illustrates an inspection screen 50 output on the user terminal 30. The screen 50 is a screen used by the user of the vulnerability inspection service to perform a vulnerability inspection through static analysis of the source code. As shown, it includes a first button 52 labeled "Specify Source Code File," a second button 54 labeled "Specify Inspection Rules," and a third button 56 labeled "Start Inspection."

The first button 52 is an object for specifying a file in which the source code of a web application to undergo a vulnerability inspection is described. When the button 52 is selected, a screen (not shown) for specifying a specific file is output so that the user can specify the file in which the source code is described through the screen. When the file is specified, the source code file storage path and the source code file name are registered in the inspection management table 154. Note that multiple files may be specified as files in which the source code is described.

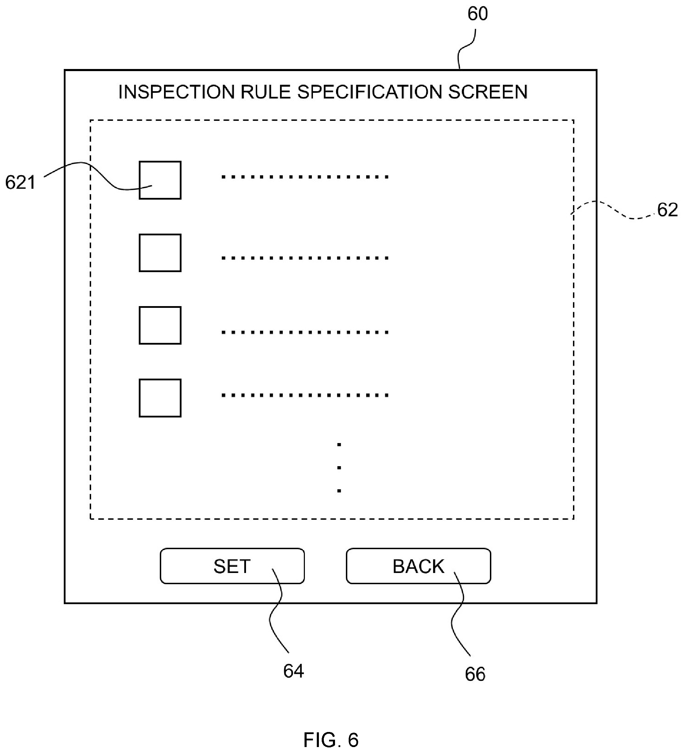

The second button 54 is an object for specifying inspection rules to be applied to the vulnerability inspection. When the button 54 is selected, an inspection rule specification screen 60 illustrated in FIG. 6 is output. As shown, the screen 60 includes an inspection rule specification area 62 for specifying inspection rules, a set button 64, and a back button 66.

In the inspection rule specification area 62, the names of multiple inspection rules (managed in the inspection rule information table 152) applicable to the vulnerability inspection are listed, and checkboxes 621 are placed on the left side of the rule names. The user selects checkboxes 621 corresponding to inspection rules to be applied to the vulnerability inspection and then selects the set button 64. When the button 64 is selected, applied inspection rule information is registered in the inspection management table 154.

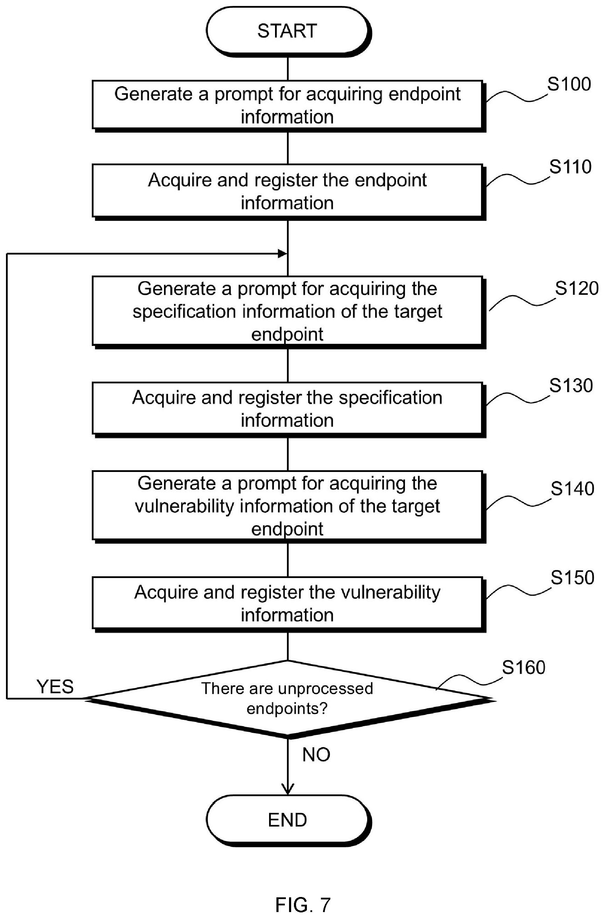

The third button 56 is an object for starting the vulnerability inspection. FIG. 7 is a flowchart illustrating a process performed by the server 10 in response to the selection of the button 56 (i.e., when performing the vulnerability inspection). As shown, the server 10 first generates a prompt for acquiring endpoint information (first instruction information) (step S100). Specifically, the server 10 generates a prompt for instructing acquisition of endpoint information on the basis of the source code of the web application.

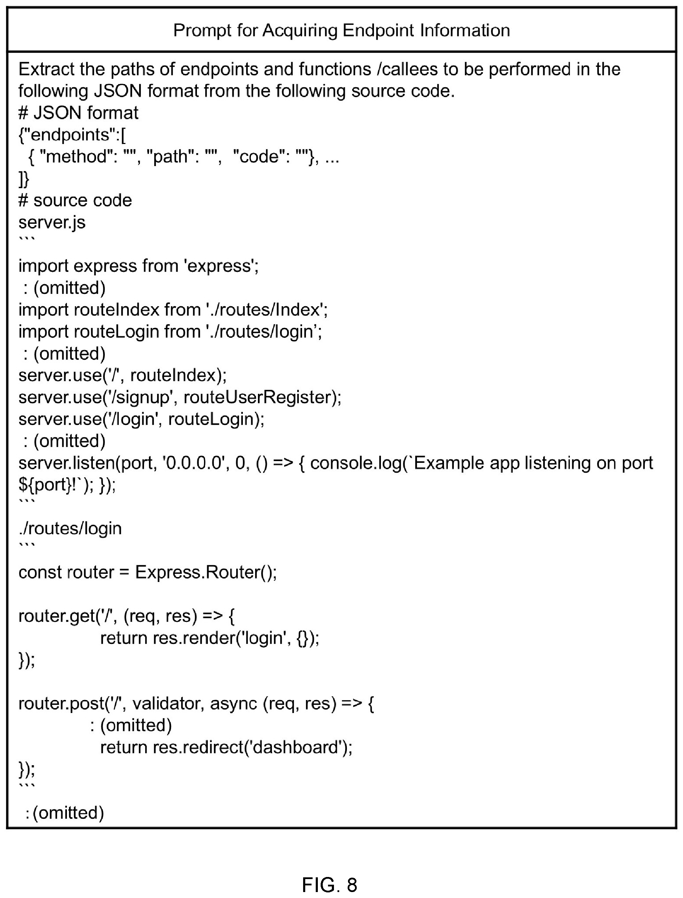

FIG. 8 illustrates a prompt for acquiring endpoint information. As shown, this prompt is for instructing extraction of the paths of endpoints and the functions / callees to be performed from the source code of the web application. Specifically, it is for instructing extraction of an HTTP method ("method"), a path ("path"), and code ("code") as information on each endpoint. The content of the source code is acquired from the source code file identified by the source code file storage path and the source code file name managed in the inspection management table 154.

Referring back to the flowchart of FIG. 7, the server 10 then acquires and registers the endpoint information (step S110). Specifically, it inputs the prompt for acquiring endpoint information into a large language model and registers the endpoint information (HTTP method, path, and code) of each of the multiple endpoints output from the large language model in the inspection detail management table 156.

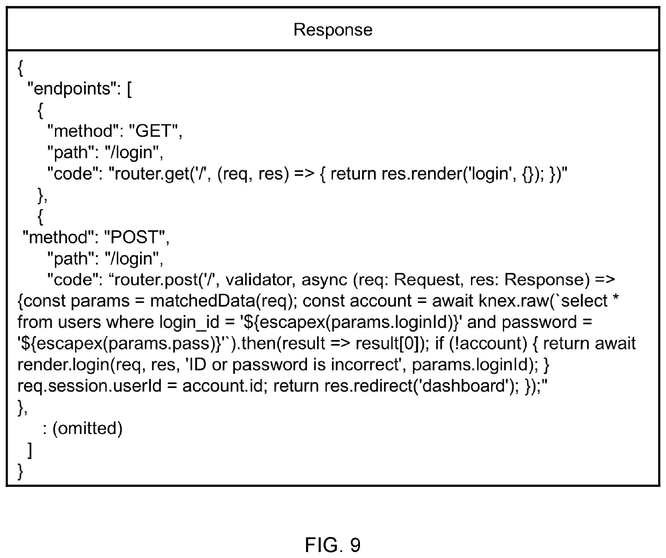

FIG. 9 illustrates a response from the large language model to which the prompt for acquiring endpoint information shown in FIG. 8 has been input. As shown, HTTP methods ("method"), paths ("path"), and code ("code") are extracted from the source code of the web application as the endpoint information of the respective endpoints in the web application.

Referring back to the flowchart of FIG. 7, the server 10 then generates a prompt for acquiring the specification information of the target endpoint (third instruction information) (step S120). Specifically, it sequentially identifies unprocessed endpoints as the target endpoint among the multiple endpoints and generates a prompt for acquiring the specification information of the target endpoint. This prompt is a prompt for instructing acquisition of the specification information on the basis of the corresponding endpoint information.

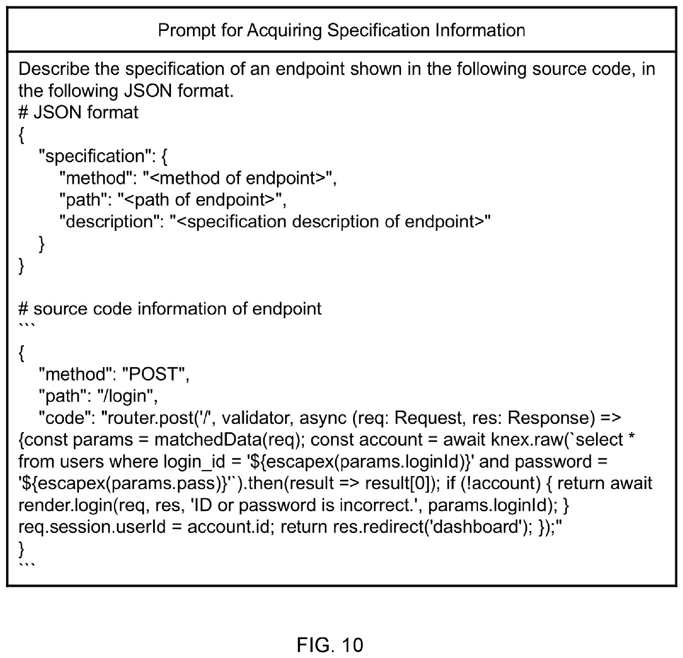

FIG. 10 illustrates a prompt for acquiring specification information. As shown, this prompt is for instructing description of the specification of an endpoint on the basis of the corresponding endpoint information. Specifically, it is for instructing description of an HTTP method ("method") performed at the endpoint and a path ("path") identifying the endpoint, as well as the specification description ("description") of the endpoint. The endpoint information (HTTP method, path, and code) is acquired from the inspection detail management table 156.

Referring back to the flowchart of FIG. 7, the server 10 then acquires and registers the specification information (step S130). Specifically, it inputs the prompt for acquiring specification information into a large language model and registers the specification information output from the large language model in the inspection detail management table 156. In this example, the specification information is acquired using the same large language model as that used to acquire the endpoint information. In another example of the present embodiment, the specification information may be acquired using a large language model different from that used to acquire the endpoint information.

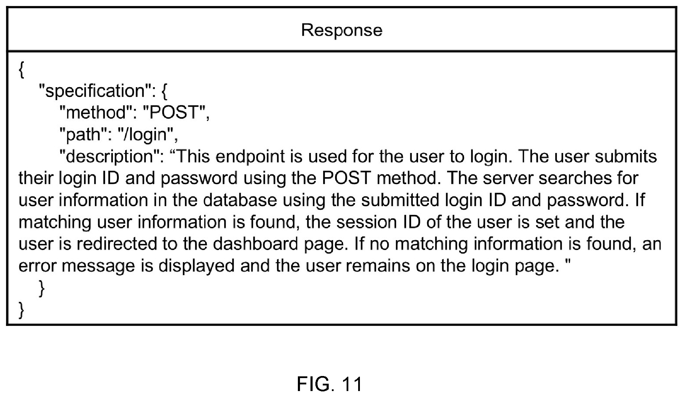

FIG. 11 illustrates a response from the large language model to which the prompt for acquiring specification information illustrated in FIG. 10 has been input. As shown, the specification of the endpoint is described in natural language (in this example, Japanese) on the basis of the corresponding endpoint information.

Referring back to the flowchart of FIG. 7, the server 10 then generates a prompt for acquiring the vulnerability information of the target endpoint (second instruction information) (step S140). Specifically, it generates a prompt for instructing acquisition of the vulnerability information of the endpoint on the basis of the corresponding specification information and the vulnerability inspection rules.

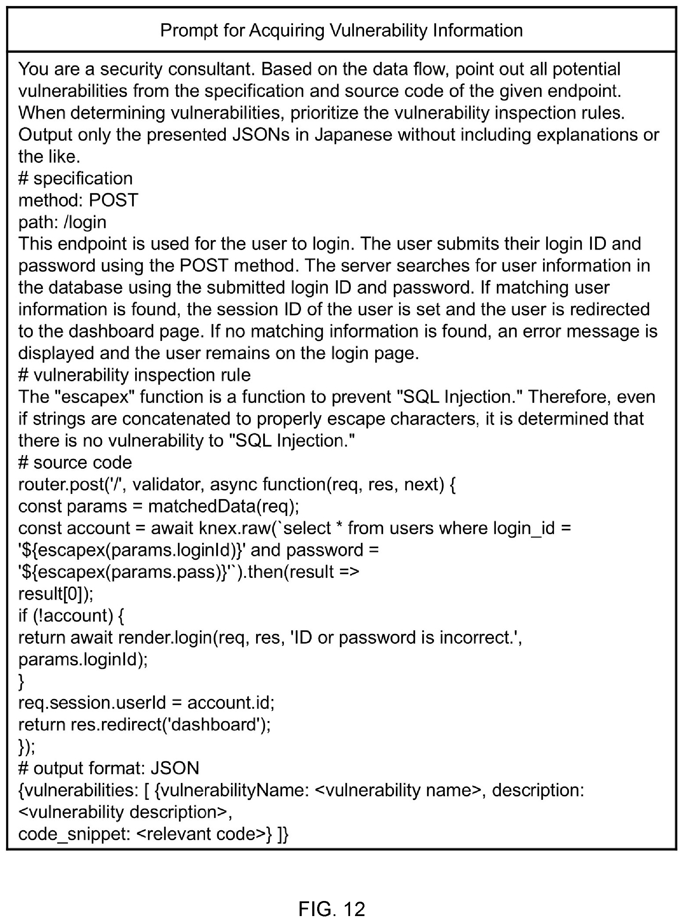

FIG. 12 illustrates the prompt for acquiring the vulnerability information. As shown, this prompt is for instructing that vulnerabilities of the endpoint be pointed out (i.e., that the names of the vulnerabilities, the description of the vulnerabilities, and relevant code be acquired) in accordance with the vulnerability inspection rules specified by the user on the basis of the specification information and code of the endpoint. The specification information and code of the endpoint are acquired from the inspection detail management table 156. The vulnerability inspection rules specified by the user are acquired from the inspection management table 154.

Referring back to the flowchart of FIG. 7, the server 10 then acquires and registers the vulnerability information (step S150). Specifically, it inputs the prompt for acquiring the vulnerability information into a large language model and registers vulnerability inspection results including the vulnerability information output from the large language model in the inspection detail management table 156. In this example, the vulnerability information is acquired using the same large language model as that used to acquire the endpoint information and specification information. In another example of the present embodiment, the vulnerability information may be acquired using a large language model different from that used to acquire the endpoint information and/or specification information.

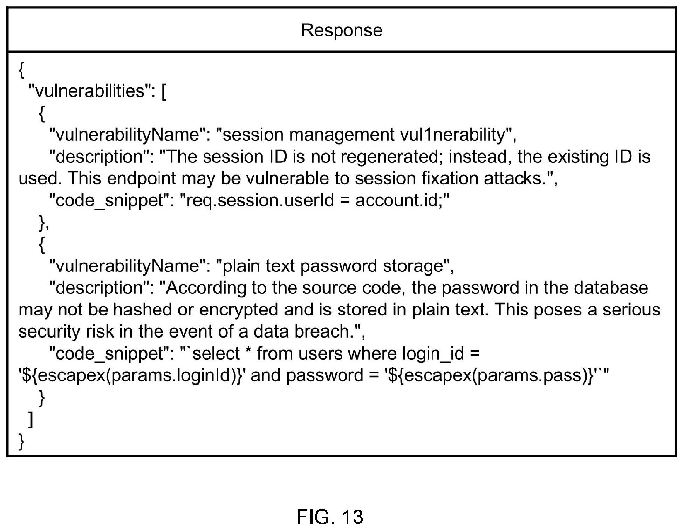

FIG. 13 illustrates a response from the large language model to which the prompt for acquiring the vulnerability information illustrated in FIG. 12 has been input. As shown, the vulnerabilities (session management vulnerability and plain text password storage) of the endpoint are pointed out on the basis of the specification information and code of the endpoint. Note that if the prompt illustrated in FIG. 12 does not include the description of the SQL injection determination exclusion rule as a vulnerability inspection rule (i.e., if this rule is not applied), an SQL injection vulnerability can be detected.

Referring back to the flowchart of FIG. 7, if there are unprocessed endpoints (YES in step S160), the process returns to step S120 and the server 10 performs, with respect to the next endpoint, generation of a prompt for acquiring specification information, acquisition and registration of specification information, generation of a prompt for acquiring vulnerability information, and acquisition and registration of vulnerability information (steps S120 to S150). This series of steps is repeated until there are no more unprocessed endpoints (NO in step S160).

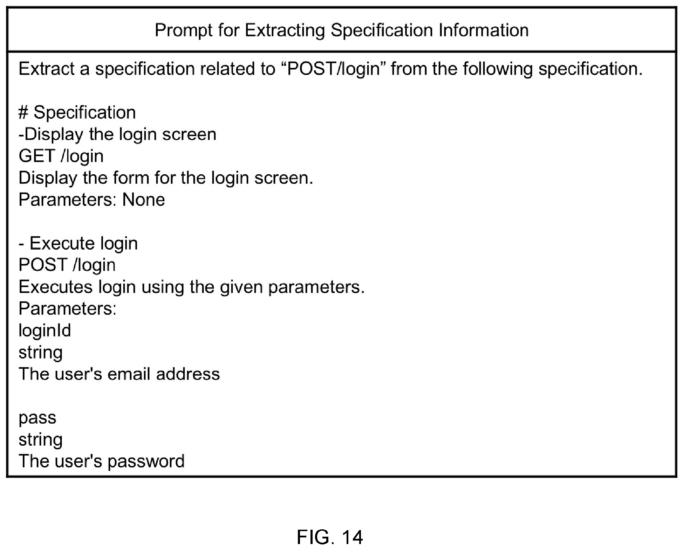

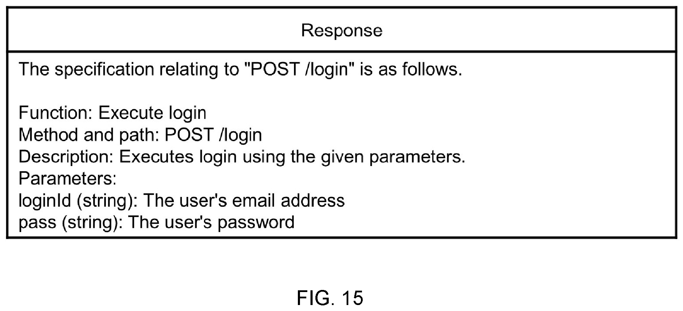

While the specification information of the endpoints is acquired using the large language model in the above example, the specification information may be provided directly by the user. In this case, the specification information of the endpoints is acquired from a file in which the specification information of the web application is described, provided by the user (for example, a button for specifying this file is placed on the inspection screen 50). In this case, a large language model may be used to extract the specification information of each endpoint from the specification information described in the file (a prompt and response in this case are illustrated in FIGS. 14 and 15).

The vulnerability inspection server 10 according to the present embodiment described above uses the large language models to acquire the endpoint information including the process information on the basis of the source code, the process information being the information on the process performed at each of the multiple endpoints in the web application and to acquire the vulnerability information of each endpoint on the basis of the corresponding endpoint information and specification information. This mechanism can be uniformly applied to vulnerability inspections on various applications constructed in diverse environments. In other words, the server 10 is able to inspect various applications for vulnerabilities.

In another embodiment of the present invention, some or all of the functions of the vulnerability inspection server 10 according to the above embodiment may be performed by collaboration of the vulnerability inspection server 10 and user terminal 30 or by the user terminal 30. In other words, the system of the present invention may consist of the vulnerability inspection server 10, or may consist of the vulnerability inspection server 10 and the user terminal 30, or may consist of the user terminal 30.

The processes and procedures described in the present description may be performed by software, hardware, or any combination thereof other than those described explicitly. For example, the processes and procedures described in the present description may be performed by implementing logic corresponding to the processes and procedures in a medium such as an integrated circuit, volatile memory, non-volatile memory, or magnetic disk. The processes and procedures described in the present description may also be implemented as a computer program corresponding to those and performed by various types of computers.

Even when it is stated that the processes and procedures described in the present description are performed by a single apparatus, software, component, or module, those processes or procedures may be performed by multiple apparatuses, multiple types of software, multiple components, and/or multiple modules. The software and hardware components described in the present description may be implemented by integrating them into fewer components or by decomposing them into more components.

When the components of the invention are described in a singular form or a plural form in the present description or even when the components are described without specifying a singular form or plural form, the components may be singular or plural unless the number of each component should be interpreted otherwise in the context.

## Claims

1. A system for inspecting a web application for vulnerabilities, the system comprising one or more computer processors, wherein
the one or more computer processors perform operations comprising:
generating first instruction information for instructing output, on the basis of source code of the web application, of endpoint information that is information on each of a plurality of endpoints in the web application, the endpoint information including process information that is information on a process performed at each of the endpoints;
inputting the first instruction information into a first large language model and acquiring the endpoint information output from the first large language model;
acquiring specification information including a specification, described in natural language, of each of the endpoints;
generating second instruction information for instructing output, on the basis of the endpoint information and the specification information, of vulnerability information that is information on a vulnerability of each of the endpoints; and
inputting the second instruction information into a second large language model and acquiring the vulnerability information output from the second large language model.

2. The system of claim 1, wherein the second large language model is identical to the first large language model.

3. The system of claim 1, wherein the process information includes an HTTP method and/or code performed at each of the endpoints.

4. The system of claim 1,
wherein the operations further comprise generating third instruction information for instructing output of the specification information on the basis of the endpoint information, and
wherein the acquiring of the specification information comprises inputting the third instruction information into a third large language model and acquiring the specification information output from the third large language model.

5. The system of claim 4, wherein the third large language model is identical to the first large language model and/or the second large language model.

6. The system of claim 1, wherein the second instruction information is for instructing output of the vulnerability information in accordance with a predetermined vulnerability inspection rule.

7. A method for inspecting a web application for vulnerabilities, the method being performed by one or more computers, the method comprising:
generating first instruction information for instructing output, on the basis of source code of the web application, of endpoint information that is information on each of a plurality of endpoints in the web application, the endpoint information including process information that is information on a process performed at each of the endpoints;
inputting the first instruction information into a first large language model and acquiring the endpoint information output from the first large language model;
acquiring specification information including a specification, described in natural language, of each of the endpoints;
generating second instruction information for instructing output, on the basis of the endpoint information and the specification information, of vulnerability information that is information on a vulnerability of each of the endpoints; and
inputting the second instruction information into a second large language model and acquiring the vulnerability information output from the second large language model.

8. A program for inspecting a web application for vulnerabilities, the program causing one or more computers to perform operations comprising:
generating first instruction information for instructing output, on the basis of source code of the web application, of endpoint information that is information on each of a plurality of endpoints in the web application, the endpoint information including process information that is information on a process performed at each of the endpoints;
inputting the first instruction information into a first large language model and acquiring the endpoint information output from the first large language model;
acquiring specification information including a specification, described in natural language, of each of the endpoints;
generating second instruction information for instructing output, on the basis of the endpoint information and the specification information, of vulnerability information that is information on a vulnerability of each of the endpoints; and
inputting the second instruction information into a second large language model and acquiring the vulnerability information output from the second large language model.
